# EUROPÄISCHE PATENTSCHRIFT

(11) **EP 3 274 776 B1**
(45) Veröffentlichungstag und Bekanntmachung des Hinweises auf die Patenterteilung: **08.05.2019**
(21) Anmeldenummer: 16712309.0
(22) Anmeldetag: 23.03.2016
(51) Int. Cl.: G05B 19/404, B23Q 15/22

(54) **VERFAHREN ZUM BETREIBEN EINER VERZAHNUNGSBEARBEITENDEN MASCHINE**
METHOD FOR OPERATING A GEAR CUTTING MACHINE
PROCÉDÉ SERVANT À FAIRE FONCTIONNER UN MACHINE À USINAGE DE DENTURE

(30) Priorität: 23.03.2015 DE 102015104289
(43) Veröffentlichungstag der Anmeldung: 31.01.2018
(73) Patentinhaber: Klingelnberg AG, 8050 Zürich (CH)
(72) Erfinder: WEBER, Jürgen, 42499 Hückeswagen (DE); RIBBECK, Karl-Martin, 42897 Remscheid (DE); BLASBERG, Herbert, 42499 Hückeswagen (DE)
(74) Vertreter: Heusch, Christian
(86) Internationale Anmeldenummer: PCT/EP2016/056310
(87) Internationale Veröffentlichungsnummer: WO 2016/150986

(56) Entgegenhaltungen:
- EP-A1- 2 394 770
- WO-A1-2007/090871
- DE-A1- 2 833 923
- US-A- 4 714 387

## Beschreibung

### Gebiet der Erfindung

Gegenstand der Erfindung ist ein Verfahren zum Betreiben einer verzahnungsbearbeitenden Maschine. Insbesondere geht es um ein Verfahren zur Temperaturkompensation in einer verzahnungsbearbeitenden Maschine.

### Hintergrund der Erfindung, Stand der Technik

Es gibt verschiedene Verfahren zum spanabhebenden Bearbeiten von Zahnrädern. Die entsprechend ausgelegten Maschinen werden hier als verzahnungsbearbeitende Maschinen bezeichnet.

Es ist bekannt, dass aufgrund verschiedener Vorgänge in einer verzahnungsbearbeitenden Maschine mit der Zeit die Temperatur der Maschine zunimmt. Im Dauerbetrieb einer Maschine erreicht diese eine sogenannte Beharrungstemperatur. Die Beharrungstemperatur ergibt sich in einen thermisch stationären Zustand. In diesem Zustand hat sich die Temperatur der Maschine thermisch eingeschwungen. Es stellt sich mit der Zeit also eine Stabilisierung der Wärmeflüsse ein, was zu dem stationären Zustand führt.

Es ist auch bekannt, dass es aufgrund thermischer Ausdehnungsprozesse zu Ungenauigkeiten in einem Bearbeitungsprozess kommen kann. Das liegt unter anderem daran, dass die verschiedensten Elemente der Maschine mit zunehmender Temperatur eine thermische Expansion erfahren. Beim Abkühlen kommt es zu einer entsprechenden thermischen Kontraktion. Einerseits verändern sich bei ansteigender Temperatur der Maschine die Dimensionen der einzelnen Maschinenelemente. Da in einer Maschine zahlreiche Elemente miteinander verbunden sind, kann es aufgrund unterschiedlicher Expansionskoeffizienten zu (Ver-)Spannungen kommen, die sich in einem nichtlinearen und nicht genau berechenbaren Ausdehnungsverhalten der Maschine zeigen.

Das thermische Verhalten einer Maschine wird von der Einwirkung von Wärmequellen und -senken beeinflusst. Man unterscheidet bei der thermischen Einwirkung zwischen internen und externen Einflüssen. Als interner Einfluss wird zum Beispiel die Wärmeabgabe von Motoren angesehen. Ein weiterer interner Einfluss ergibt sich aus der spanabhebenden Wechselwirkung eines Werkzeugs mit einem Werkstück, da hier mechanische Energie in Wärme umgewandelt wird. Externe Einflüsse sind zum Beispiel die Umgebungstemperatur in einer Maschinenhalle.

Es ist unmittelbar ersichtlich, dass sich die Länge zum Beispiel eines Kragarms, der an einer Seite mit z.B. einem Maschinenständer verbunden ist, mit zunehmender Temperatur vergrößert. Ein solcher Kragarm erfährt eine lineare Ausdehnung in Längsrichtung. Bei komplizierten Maschinenelementen und komplexeren Geometrien, wie z.B. einem Spindellager, sind die Zusammenhänge deutlich komplexer.

Die Arbeitsgenauigkeit spanender Maschinen hängt im Wesentlichen davon ab, wie genau die Bewegungen im 3-dimensionalen Raum zwischen dem Werkzeug und dem Werkstück ausgeführt werden können. Letztendlich ergeben sich aufgrund aller temperaturbedingter Effekte Relativabweichungen beim Bewegen des Werkzeugs relativ zum Werkstück. Diese Relativabweichungen führen zu Abweichungen am Werkstück.

Die Produktivität und Genauigkeit sind wichtige Aspekte von Werkzeugmaschinen. Im Hinblick auf stark gestiegene Forderungen in Sachen Fertigungspräzision, gewinnt die thermische Genauigkeit von Maschinen immer mehr an Bedeutung. Besonders bei kleinen Fertigungslosen und damit wechselnden Maschinenaufträgen kann kein thermisch stabiler Zustand erreicht werden. Bei Maschinen, die im Dauereinsatz sind, gewinnt die Genauigkeit vor allem nach einer Unterbrechung an Bedeutung. Außerdem möchte man den Ausschuss reduzieren, der üblicherweise nach eine Unterbrechung anfällt bis die Maschine wieder einigermaßen die Beharrungstemperatur erreicht hat. Es geht neben der Genauigkeit also auch um Fragen der Wirtschaftlichkeit.

Ein gängiger Ansatz ist es, Maschine und Umgebung auf einem konstanten Temperaturniveau zu halten. Durch eine gleichbleibende Temperatur lässt sich die Verformung der Maschine vermeiden. Dazu müssen einerseits die Maschinenhalle klimatisiert und andererseits die Maschine dauerhaft betrieben werden. Der Kosten- und Energieaufwand ist entsprechend hoch.

Ein anderer Ansatz ist die Überwachung der Verformung der Maschine durch integrierte Sensoren. Anhand eines mathematischen Modells, in dem die Daten der Sensoren weiterverarbeitet werden, kann die Grundlage für eine näherungsweise Vorhersage der Fehler bilden, die am Werkstück entstehen würden. Sind diese Fehler bekannt, so kann die Maschine die Bearbeitung entsprechend anpassen und die Fehler kompensieren. Auch hier ist der Aufwand groß. Außerdem gibt es bisher keine technologischen Ansätze, die den hohen Genauigkeitsanforderungen genügen. EP 2 394 770 A1 beschreibt ein Verfahren zur Korrektur von temperaturbedingten Abweichungen der Werkzeuggeometrie in einer Verzahnmaschine.

Es stellt sich in Anbetracht der obigen Ausführungen die folgende Aufgabe. Es geht darum einen Ansatz zu finden, der es ermöglicht temperaturbedingte Veränderungen einer Maschine zu kompensieren. Vor allen geht es darum die Genauigkeit eines Bearbeitungsprozesses in einer Maschine unmittelbar nach einer Unterbrechung zu verbessern, um so den Ausschuss zu reduzieren. Als Unterbrechung wird eine Pause bezeichnet, die vorzugsweise mehr als 15 Minuten beträgt.

Gemäß Erfindung wird ein Verfahren zur Verfügung gestellt, dessen Merkmale dem Anspruch 1 zu entnehmen sind.

Weitere bevorzugte Ausführungsformen sind den jeweiligen Unteransprüchen zu entnehmen.

### ZEICHNUNGEN

Weitere Einzelheiten und Vorteile der Erfindung werden im Folgenden anhand von Ausführungsbeispielen und mit Bezug auf die Zeichnung beschrieben.
- **FIG. 1**: zeigt eine schematische Vorderansicht einer Verzahnungsmaschine, in der das erfindungsgemäße Verfahren eingesetzt werden kann;
- **FIG. 2A**: zeigt eine Perspektivansicht eines Teils einer beispielhaften Verzahnungsmaschine mit Messvorrichtung, in der das erfindungsgemäße Verfahren eingesetzt werden kann, wobei im gezeigten Moment ein Werkstück bearbeitet wird;
- **FIG. 2B**: zeigt eine Perspektivansicht eines Teils der Verzahnungsmaschine der Fig. 2A, wobei im gezeigten Moment die Messvorrichtung der Maschine zum Einsatz kommt (es handelt sich hier um einen Aufbau mit einem Messtaster, der vor dem Messen referenziert wird);
- **FIG. 3A**: zeigt eine Draufsicht eines Werkzeugs und eines Werkstücks einer beispielhaften Verzahnungsmaschine mit Messvorrichtung, wobei im gezeigten Moment das Werkstück mit dem Werkzeug bearbeitet wird;
- **FIG. 3B**: zeigt eine Draufsicht des Werkzeugs und des Werkstücks der Fig. 3A, wobei im gezeigten Moment das Werkzeug relativ zum Werkstück entfernt wird;
- **FIG. 3C**: zeigt eine Draufsicht des Werkzeugs und des Werkstücks der Fig. 3A, wobei im gezeigten Moment die Messvorrichtung der Maschine zum Einsatz kommt;
- **FIG. 3D**: zeigt eine Draufsicht des Werkzeugs und eines zweiten Werkstücks, wobei im gezeigten Moment das Werkstück mit dem zweiten Werkzeug bearbeitet wird.

### DETAILLIERTE BESCHREIBUNG

Im Zusammenhang mit der vorliegenden Beschreibung werden Begriffe verwendet, die auch in einschlägigen Publikationen und Patenten Verwendung finden. Es sei jedoch angemerkt, dass die Verwendung dieser Begriffe lediglich dem besseren Verständnis dienen soll. Der erfinderische Gedanke und der Schutzumfang der Patentansprüche soll durch die spezifische Wahl der Begriffe nicht in der Auslegung eingeschränkt werden. Die Erfindung lässt sich ohne weiteres auf andere Begriffssysteme und/oder Fachgebiete übertragen. In anderen Fachgebieten sind die Begriffe sinngemäß anzuwenden.

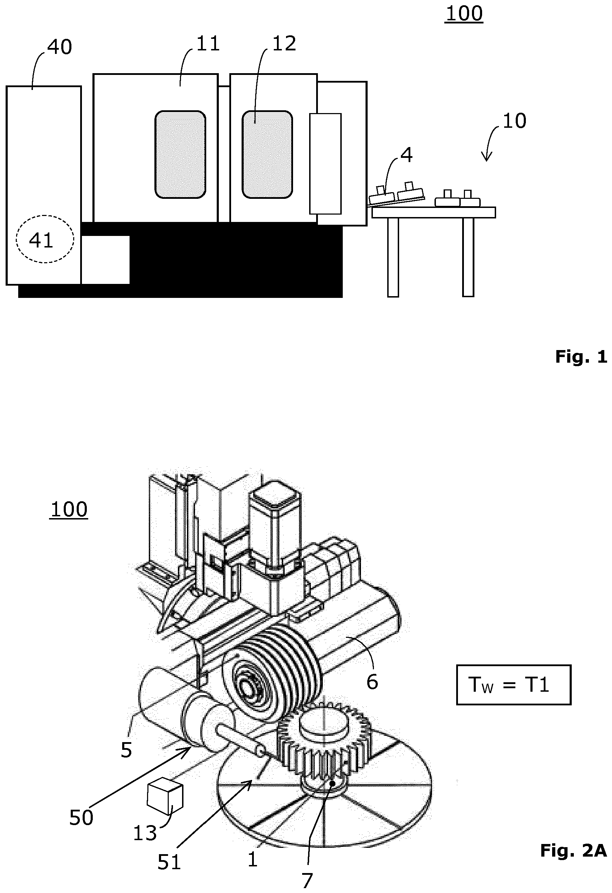

In Fig. 1 ist eine schematisierte Ansicht einer erfindungsgemäß ausgestatteten (Zahnrad-)Maschine 100 gezeigt. Bei der Maschine 100 handelt es sich um eine Verzahnungsmaschine. Der eigentliche Bearbeitungsraum - in dem Zahnräder (entsprechende Rohlinge 4 sind rechts im Bereich einer Werkstück-Zufuhr 10 gezeigt) bearbeitet werden - befindet sich hinter einer Verkleidung 11, die beispielsweise mit Sichtfenstern 12 versehen sein kann. Eine (CNC-)Steuerung 41 kann in dem Gehäuse derselben Maschine 100 oder in einem separaten Gehäuse 40 untergebracht sein.

Die Maschine 100 ist speziell zum spanenden Bearbeiten (z.B. Schleifen oder Fräsen) der Zahnflanken von Zahnrädern ausgelegt. Da es hier primär um die Serienproduktion von Zahnrädern geht, ist im Folgenden von einem ersten Werkstück 1, einem zweiten Werkstück 2 und einem dritten Werkstück 3 die Rede. Es werden hier Zahlwörter verwendet, um eine zeitliche Abfolge vorzugeben. Das erste Werkstück 1 wird in zeitlicher Reihenfolge vor dem zweiten und jedem weiteren Werkstück bearbeitet. Das zweite Werkstück 2 wird nach dem ersten Werkstück 1 und vor dem dritten Werkstück 3 bearbeitet. Es ist im Zusammenhang mit der vorliegenden Erfindung wichtig zu beachten, dass das zweite Werkstück 2 nicht direkt nach dem ersten Werkstück 1 und das dritte Werkstück 3 nicht direkt nach dem zweiten Werkstück 2 bearbeitet werden muss.

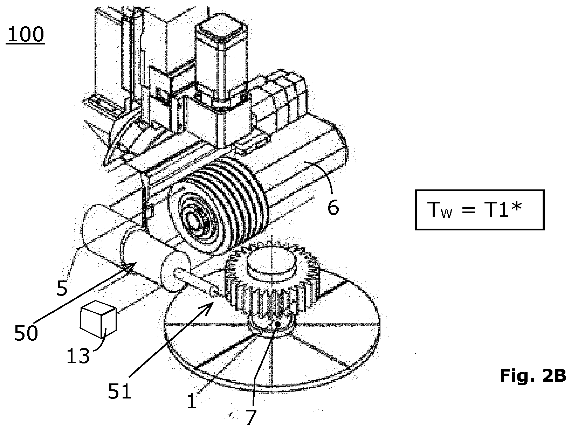

In den Figuren 2A und 2B sind beispielhafte Details des Arbeitsbereichs einer Maschine 100 gezeigt. Es handelt sich in dem gezeigten Beispiel um eine Maschine 100, die eine Schleifschnecke als Werkzeug 5 umfasst und die zum Wälzschleifen von Stirnrädern ausgelegt ist. Die Erfindung kann auch in anderen Maschinen zum Einsatz kommen (z.B. in einer Maschine zum Schleifen von Kegelrädern). Der Drehantrieb (Spindelantrieb) des Werkzeugs 5 ist mit dem Bezugszeichen 6 gekennzeichnet. In Fig. 2A ist das spanabhebende Bearbeiten des Werkstücks 1 mit dem Werkzeug 5 gezeigt. Im gezeigten Moment befindet sich das Werkzeug 5 in Wirkverbindung mit dem Werkstück 1.

Aus den Figuren 2A und 2B ist zu entnehmen, dass die Maschine 100 Aufspannmittel zum Aufspannen eines zu bearbeitenden Werkstücks (z.B. eines Rohlings 4) aufweist. In Fig. 2A und 2B ist das Werkstück 1 an der Werkstückspindel 7 aufgespannt. Die Aufspannmittel sind nicht direkt zu erkennen. Außerdem umfasst die Maschine 100 ein Werkzeugspannmittel zum Einspannen eines Verzahnwerkzeugs 5 (z.B. eines Schleif- oder Fräswerkzeugs) für die spanende Bearbeitung der Zahnflanken des Werkstücks 1. Die Werkzeugspannmittel sind in den Figuren nicht zu erkennen, da sie im Bereich zwischen dem Werkzeug 5 und dem Drehantrieb 6 sitzen.

Zusätzlich umfasst die Maschine 100 eine Messvorrichtung 50, wie in den Figuren 2A und 2B in stark schematisierter Form gezeigt. Diese Messvorrichtung 50 ist bei allen Ausführungsformen Bestandteil der Maschine 100, d.h. die Messvorrichtung 50 ist an der Maschine 100 befestigt. Die Messvorrichtung 50 nach Fig. 2A und 2B ist so ausgelegt, dass sie referenziert werden kann. Das Referenzieren ermöglicht trotz temperaturbedingter Änderungen, die auch die Messvorrichtung 50 betreffen können, ein möglichst genaues Messen am Werkstück 1.

Vorzugsweise ist die Messvorrichtung 50 bei allen Ausführungsformen so ausgelegt, dass sie wegbewegbar ist, um beim Bearbeiten des Werkstücks 1 mit dem Werkzeug 5 keinen Schaden zu nehmen. In Fig. 2A und Fig. 2B ist beispielhaft angedeutet, dass die Messvorrichtung 50 einen Teleskopaufbau haben kann. In Fig. 2A ist der Teleskopaufbau zusammengezogen und der eigentliche Sensor 51 ist weggeklappt oder weggeschwenkt. In Fig. 2B ist der Teleskopaufbau ausgefahren und der Sensor 51 ist in eine Zahnlücke geklappt oder geschwenkt worden.

Vorzugsweise umfasst die Maschine 100 bei allen Ausführungsformen einen Referenzpunkt oder einen Referenzfläche 13, die in den Figuren 2A und 2B andeutungsweise gezeigt ist. Dieser Referenzpunkt bzw. diese Referenzfläche 13 ist temperaturstabil bzw. -neutral ausgelegt, damit eine Referenz innerhalb der Maschine 100 zur Verfügung steht, die keinen temperaturbedingten Verlagerungen oder Veränderungen unterliegt. Das Beziehen einer Referenzgrösse von einem Referenzpunkt oder einer Referenzfläche 13 wird hier als Referenzieren bezeichnet.

Vorzugsweise ist auch die Messvorrichtung 50 bei allen Ausführungsformen temperaturneutral ausgelegt, damit man aufgrund von Temperaturänderungen keine verfälschten Messergebnisse erhält.

Die Messvorrichtung 50 ist vorzugsweise bei allen Ausführungsformen möglichst nahe an der Werkstückspindel 7 und nicht im Bereich des Werkzeugs 5 positioniert (temperaturneutral hinsichtlich ihre Relativlage zum Werkstück 1) oder die Messvorrichtung 50 sollte vor der Messung referenziert werden (siehe Figuren 2A und 2B). Sonst würde bei einer Messung nach einer Pause (Abkühlung) falsch gemessen werden.

Vorzugsweise umfasst die Messvorrichtung 50 bei allen Ausführungsformen eine temperaturneutrale und biegesteife Konstruktion, damit sie auch unter verschiedenen Temperatureinflüssen stabil bleibt. Die wesentlichen Elemente der Messvorrichtung 50 können z.B. aus einer Kombination von Kohlefaserverbundstoffen und Keramik (für ein minimales Gewicht und hohe für eine hohe Biegesteifigkeit) aufgebaut sein. Die Massstäbe, die zum Einsatz kommen, können z.B. aus einer temperaturneutralen Keramik gefertigt sein. Zusätzlich oder alternativ kann die Messvorrichtung 50 temperaturkompensiert (z.B. mit einer aktiven dynamischen Temperaturkompensation) ausgeführt sein.

Bei Maschinen 100, die mit einem Referenzpunkt oder einer Referenzfläche 13 ausgestattet sind, kann sich die Messvorrichtung 50 beim Referenzieren einen räumlichen Bezug holen, indem z.B. der Sensor 51 den Referenzpunkt oder die Referenzfläche 13 antastet. Die Koordinatenwerte des Referenzpunkts oder der Referenzfläche 13 können dann z.B. bei anschliessenden Berechnungen als rechnerischer Bezug dienen.

Aufgrund der spanabhebenden Bearbeitung ergibt sich eine Werkstücktemperatur T_{W}, die den in Fig. 2A angegebenen Wert T1 erreicht. Nachdem den Bearbeitung abgeschlossen ist, wird eine Relativbewegung in der Maschine 100 ausgeführt, um das Werkzeug 5 von dem Werkstück 1 zu trennen. Der entsprechende Zustand ist in Fig. 2B gezeigt. Das Werkstück 1 kühlt langsam ab. Es ergibt sich eine Werkstücktemperatur T_{W}, die den in Fig. 2B angegebenen Wert T1* annimmt. Dabei gilt die folgende Aussage: T1 > T1*.

Nun kommt die Messvorrichtung 50 zum Einsatz, wie in Fig. 2B angedeutet. Mittels der Messvorrichtung 50 wird mindestens eine charakteristische Werkstückgröße W.1 des Werkstücks 1 ermittelt. Das geschieht gemäss Erfindung möglichst unmittelbar nach dem Bearbeiten des Werkstücks 1. D.h. das Werkstück 1 ist beim Ermitteln der charakteristischen Werkstückgröße W.1 immer noch warm.

Im Folgenden sind einige beispielhafte Zahlenwerte aus der Praxis gegeben. Die Beharrungstemperatur T_{VH} einer Maschine 100 hängt unter anderem von der Umgebungstemperatur ab. Üblicherweise ergeben sich z.B. beim Fräsen Temperaturdifferenzen zwischen einer gerade in Betrieb genommenen Maschine und einer betriebswarmen Maschine von 20° bis über 30°. Die Temperaturen der Werkstücke 1 nach einer Fräsbearbeitung können bis auf 60°C ansteigen, d.h. sie erfahren eine Temperaturerhöhung durch die Bearbeitung um ca. 40°C. Die Temperaturänderungen an einer Schleifmaschine liegen deutlich unter diesen Werten.

Da in der Maschine 100 Rohlinge 4 oder Werkstücke 1 bearbeitet werden, bei denen es sich um Drehteile handelt, ist zum Beispiel deren Umfangsfläche (Zylindermantelfläche bei einem Stirnrad oder Kegelstumpffläche bei einem Kegelrad) nicht genau masshaltig. Das Antasten der Umfangsfläche mit der Messvorrichtung 50 ergibt somit keine brauchbaren Werkstückgrößen, selbst wenn die Messvorrichtung 50 bei sich verändernden Temperaturen genau arbeitet oder temperaturkompensiert misst. Gemäß Erfindung wird daher die charakteristische Werkstückgröße W.1 vorzugsweise bei allen Ausführungsformen an Flächen oder Punkten ermittelt, die soeben in der Maschine 100 bearbeitet wurden. Im Beispiel der Fig. 2B dringt der Sensor 51 in eine Zahnlücke ein, um dort z.B. die Lückenweite abzutasten. Die Lückenweite kann beispielsweise auf dem Nennkreis NK des Werkstücks 1 abgetastet und als charakteristische Werkstückgröße W.1 einer Weiterverarbeitung zugeführt werden.

Weitere Aspekte der Erfindung werden im Folgenden anhand der Verfahrensschritte beschrieben, die beim Betreiben der verzahnungsbearbeitenden Maschine 100 ausgeführt werden. Die erfindungsgemäße Maschine 100 zeichnet sich dadurch aus, dass sie zum Durchführen des im Folgenden näher beschriebenen Verfahrens ausgelegt ist. Vorzugsweise umfasst eine geeignete Maschine 100 neben den erforderlichen Achsen, Spannmitteln und Antrieben auch die erwähnte Messvorrichtung 50. Weiterhin kommt eine Software zum Einsatz, die in der Maschine 100 oder in einem mit der Maschine 100 verbindbaren System installiert ist.

Das Verfahren umfasst vorzugsweise die folgenden Schritte:
- Es wird die Bearbeitung eines ersten Werkstücks 1 in der Maschine 100 durchgeführt (siehe Fig. 2A), wobei sich das erste Werkstück 1 aufgrund der Bearbeitung erwärmt. Das Werkstück 1 erreicht eine Temperatur von T_{W} = T1.
- Es wird dann mindestens eine charakteristische Werkstückgröße W.1 an dem ersten Werkstück 1 im erwärmten Zustand ermittelt (hier bei T_{W} = T1*), wobei zum Ermitteln der Sensor 51 der Maschine 100 zum Einsatz kommt. Eine entsprechende Momentaufnahme ist in Fig. 2B gezeigt.
- Dann wird eine sogenannte Kompensationsermittlung durchgeführt. Dies geschieht anhand der mindestens einen charakteristischen Werkstückgröße W.1 des ersten Werkstücks 1 und anhand mindestens einer charakteristischen Werkstückgröße W.R eines Referenzwerkstücks R. Im zuvor erwähnten Beispiel wird z.B. die Lückenweite des ersten Werkstücks 1 bei T_{W} = T1* mit der Lückenweite des Referenzwerkstücks R verglichen. Dabei ist festzuhalten, dass die charakteristische Werkstückgröße W.R des Referenzwerkstücks R auch im warmen Zustand ermittelt worden ist. Vorzugsweise wurde die charakteristische Werkstückgröße W.R des Referenzwerkstücks R auch bei einer Temperatur ermittelt, die in etwa der Temperatur T1* entspricht. Vorzugsweise wird bei allen Ausführungsformen die charakteristische Werkstückgröße W.R des Referenzwerkstücks R in der Maschine 100 nach dem Erreichen der Beharrungstemperatur T_{VH} ermittelt. D.h. diese charakteristische Werkstückgröße W.R wurde ermittelt nachdem die Maschine 100 längere Zeit betrieben wurde und sich somit im thermisch eingeschwungenen Zustand befand. Im Rahmen der Kompensationsermittlung wird mindestens ein Kompensationswert ermittelt. Im genannten Beispiel ist z.B. die folgende Situation denkbar. Aufgrund der Tatsache, dass die Temperatur der Maschine 100 beim Bearbeiten des ersten Werkstücks 1 noch unterhalb der Beharrungstemperatur T_{VH} lag, hat das Werkstück 1 etwas andere Dimensionen als das Referenzwerkstück R. Im beschriebenen Beispiel ist z.B. die Lückenweite des Referenzwerkstücks R etwas grösser als die Lückenweite des ersten Werkstücks 1. Die Differenz der beiden Lückenweiten (d.h. die Differenz der beiden charakteristischen Werkstückgröße W.R und W.1) wird im Rahmen der Kompensationsermittlung errechnet. Daraus kann für die Bearbeitung des nächsten Werkstücks 2 in der Maschine 100 ein Kompensationswert ermittelt werden. Bei einem Completing-Verfahren, bei dem das Profil des Werkzeugs 5 die Form der Zahnlücken am Werkstück vorgibt, kann der Kompensationswert vorgeben, dass beim Bearbeiten des nächsten Werkstücks 2 das Werkzeug 5 ein Stück weit tiefer in die zu bearbeitende Zahnlücke eintauchen muss.
- Es wird nun anhand des Kompensationswerts mindestens eine Maschineneinstellung angepasst. Im genannten Beispiel wird zum Beispiel die Eintauchtiefe unter Berücksichtigung des Kompensationswerts geändert.
- Dann erfolgt die Bearbeitung z.B. des zweiten Werkstücks n = 2 in der Maschine 100. Dadurch wird die zuvor am Werkstück 1 als zu gering ermittelte Lückenweite am Werkstück 2 ausgeglichen.

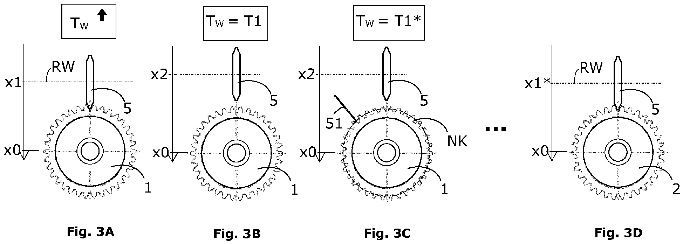

Anhand der Figuren 3A bis 3D wird dieses Beispiel weiter veranschaulicht. In diesen Figuren ist ein Stirnrad als erstes Werkstück 1 gezeigt. Es kommt im Rahmen eines Completing-Verfahrens eine Schleifscheibe als Werkzeug 5 zu Einsatz. Das Profil des Werkzeugs 5 bestimmt die Form der Zahnlücken am Werkstück 1.

In den Figuren 3A bis 3D ist jeweils links eine ortsfeste Koordinatenachse x eingezeichnet. Diese Koordinatenachse x dient rein zur Veranschaulichung der Zusammenhänge.

Die Rotationsachse des Werkzeugs RW liegt in den Figuren 3A bis 3D in der Zeichenebene. In Fig. 3A ist zu erkennen, dass das Werkzeug 5 mit seiner Rotationsachse RW bis zu einer Position x1 in die Zahnlücke des Werkstücks 1 eingetaucht wird. Die Rotationsachse RA des Werkstücks 1 steht senkrecht zur Zeichenebene und liegt hier fix bei der Position x = x0.

Nachdem das Werkstück 1 bearbeitet wurde, werden Werkstück 1 und Werkzeug 5 relativ voneinander getrennt. Dieser Schritt ist in Fig. 3B gezeigt. Im gezeigten Beispiel verharrt das Werkstück 1 in der vorherigen Position x = x0 und die Rotationsachse RW des Werkzeugs 5 wird samt dem Werkzeug 5 zurückbewegt (hier von der Position x1 zur Position x2). Nun folgt das Ermitteln der charakteristischen Werkstückgröße W.1 des ersten Werkstücks 1. Zu diesem Zweck wird ein Sensor 51 in eine Zahnlücke des Werkstücks 1 eingetaucht und gegen die linke und gegen die rechte Zahnflanke dieser Zahnlücke bewegt. Dies kann z.B. am Nennkreis NK geschehen. Die Kompensationsermittlung wird nun durchgeführt (vorzugsweise auf rechnerischem Wege mittels Software), um festzustellen, ob und inwieweit die Lückenweite des ersten Werkstücks 1 von einer als Referenzgröße W.R dienenden Lückenweite eines Referenzwerkstücks R abweicht.

Im beschriebenen Beispiel ist z.B. die Lückenweite des Referenzwerkstücks R etwas kleiner als die Lückenweite des ersten Werkstücks 1. Die Differenz der beiden Lückenweiten (d.h. die Differenz der beiden charakteristischen Werkstückgröße W.R und W.1) wird im Rahmen der Kompensationsermittlung errechnet.

In einem nachgelagerten Verfahrensschritt wird, wie in Fig. 3D gezeigt, ein weiteres Werkstück bearbeitet. Im gezeigten Beispiel geht es um das zweite Werkstück 2. Da die gemessene Lückenweite am warmen Werkstück 1 grösser war als am warmen Referenzwerkstück R, muss nun im Schritt der Fig. 3D das Werkzeug 5 weniger weit in das Material des Werkstücks 2 eintauchen als diee in Fig. 3A der Fall war. Als Kompensationswert kann z.B. ein Wert x1* ermittelt werden. Die Differenz (parallel zur x-Achse) zwischen dem Wert x1 und dem Wert x1* ergibt sich aus einer Transformationsrechnung. D.h. der Wert x1* wird nun so ermittelt, dass (falls die Temperatur der Maschine 100 und des Werkstücks 2 gleich sind wie in Fig. 3A) trotz temperaturbedingter Abweichungen das Werkzeug 5 etwas weniger weiter eintaucht. So wird nun in Fig. 3D ein Werkstück 2 gefertigt, dessen Werte in Sachen Temperaturfehler kompensiert wurden. In Fig. 3D gilt: |x0 - x1*| > |x0 - x1|.

Gemäss Erfindung kann das Ermitteln von charakteristischen Werkstückgrössen von Zeit zu Zeit wiederholt werden während sich die Maschine 100 weiter erwärmt. So können z.B. das dritte Werkstück 3 und das vierte bis zehnte Werkstück mit demselben Kompensationswert gefertigt werden wie im Zusammenhang mit Fig. 3D beschrieben. Das zehnte Werkstück kann erneut (wie zuvor das erste Werkstück 1) im warmen Zustand vermessen werden (wie in Fig. 3C gezeigt). Für das elfte Werkstück kann dann ein Kompensationswert ermittelt werden. Das elfte Werkstück wird dann unter Anwendung dieses Kompensationswerts bearbeitet. So kann bis zum Erreichen der Beharrungstemperatur T_{VH} sichergestellt werden, dass die im Zwischenzeitraum bearbeiteten Werkstücke relativ genau formhaltig sind.

Um nach einer Unterbrechung Fehler auszuschließen (z.B. weil ein fehlerhaftes Werkzeug eingespannt wurde), können vor dem Durchführen der Bearbeitung des ersten Werkstücks 1 an einem anderen Werkstück 0 die folgenden Schritte durchgeführt werden:
- Durchführen der Bearbeitung dieses anderen Werkstücks 0 in der Maschine 100, wobei sich dieses andere Werkstück 0 während der Bearbeitung erwärmt,
- Ermitteln einer oder mehrerer Kenngrößen dieses anderen Werkstücks 0 im abgekühlten Zustand, zum Feststellen ob dieses andere Werkstück 0 Sollwerten entspricht,
- Falls dieses andere Werkstück 0 den Sollwerten entspricht, so kann mit dem Bearbeiten des ersten Werkstücks 1 begonnen werden, wie beschrieben. Falls dieses andere Werkstück 0 nicht den Sollwerten entsprechen sollte, so muss eine Überprüfung (z.B. durch den Bediener der Maschine 100) durchgeführt werden.

Dies kann in einer separaten Messmaschine durchgeführt werden, die über einen closed-loop mit der Maschine 100 verbindbar ist.

**Bezugszeichen**

| | |
|---|---|
| Werkstück | 0 |
| erstes Werkstück | 1 |
| zweites Werkstück | 2 |
| drittes Werkstück | 3 |
| Rohlinge | 4 |
| Werkzeug | 5 |
| Werkzeug-Antrieb | 6 |
| Werkstückspindel | 7 |
| | |
| Werkstück-Zufuhr | 10 |
| Verkleidung | 11 |
| Sichtfenster | 12 |
| Referenzpunkt/Referenzfläche | 13 |
| | |
| separates Gehäuse | 40 |
| (CNC-)Steuerung | 41 |
| | |
| Messvorrichtung | 50 |
| Sensor | 51 |
| | |
| Maschine | 100 |
| | |
| Weiteres Werkstück | n |
| Nennkreis | NK |
| Referenzwerkstück | R |
| Rotationsachse des Werkstücks | RA |
| Charakteristische Werkstückgröße des ersten Werkstücks | W.1 |
| Charakteristische Werkstückgröße des zweiten Werkstücks | W.2 |
| charakteristischen Werkstückgröße des Referenzwerkstücks | W.R |
| Unterbrechung | Δt |
| Rotationsachse des Werkzeugs | RW |
| Bearbeitungstemperatur | T1 |
| Temperatur kurz nach der Bearbeitung | T1* |
| Beharrungstemperatur | T_{VH} |
| Werkstücktemperatur | T_{W} |
| Koordinatenachse | x |
| Werte auf der Koordinatenachse | x0, x1, x2 |
| Korrigierter Wert auf der Koordinatenachse | x1* |

## Patentansprüche

1. Verfahren zum Betreiben einer verzahnungsbearbeitenden Maschine (100) mit den folgenden Schritten:
- Durchführen der Bearbeitung eines ersten Werkstücks (1) in der Maschine (100), wobei sich das erste Werkstück (1) aufgrund der Bearbeitung erwärmt,
- Ermitteln mindestens einer charakteristischen Werkstückgröße (W.1) an dem ersten Werkstück (1) im erwärmten Zustand, wobei zum Ermitteln eine Messvorrichtung (50), die Teil der Maschine (100) ist, zum Einsatz kommt,
- Durchführen einer Kompensationsermittlung anhand der mindestens einen charakteristischen Werkstückgröße (W.1) des ersten Werkstücks (1) und mindestens einer charakteristischen Werkstückgröße (W.R) eines Referenzwerkstücks (R), wobei
∘ die charakteristische Werkstückgröße (W.R) des Referenzwerkstücks (R) in der Maschine (100) nach dem Erreichen einer Beharrungstemperatur (T_{VH}) ermittelt wurde,
∘ im Rahmen der Kompensationsermittlung mindestens ein Kompensationswert ermittelt wird,
- Anpassen der Maschineneinstellung unter Berücksichtigung des mindestens einen Kompensationswerts,
- Durchführen der Bearbeitung eines weiteren Werkstücks (n) in der Maschine (100).

2. Verfahren nach Anspruch 1, **dadurch gekennzeichnet, dass** es sich bei dem Referenzwerkstück (R) um eines der Werkstücke handelt, die vor einer Unterbrechung (Δt) in der Maschine (100) bearbeitet wurden.

3. Verfahren nach Anspruch 1 oder 2, **dadurch gekennzeichnet, dass** das Durchführen der Bearbeitung des ersten Werkstücks (1) und das Ermitteln mindestens einer charakteristischen Werkstückgröße (W.1) in der Maschine (100) unmittelbar nach einer Unterbrechung (Δt) erfolgen.

4. Verfahren nach einem der Ansprüche 1 bis 3, **dadurch gekennzeichnet, dass** es sich bei der Beharrungstemperatur (T_{VH}) um die Temperatur der Maschine (100) handelt, die sich an oder in der Maschine (100) im Dauerbetrieb einstellt.

5. Verfahren nach einem der Ansprüche 1 bis 4, **dadurch gekennzeichnet, dass** das Ermitteln der charakteristischen Werkstückgrößen (W.1, W.2, W.R) mittels eines Messtasters (51) der Messvorrichtung (50) erfolgt, wobei die Messvorrichtung (50) Teil der Maschine (100) ist und wobei beim Ermitteln der charakteristischen Werkstückgrößen (W.1, W.2, W.R) das entsprechenden Werkstück (1, 2, R) nicht umgespannt wird.

6. Verfahren nach einem der Ansprüche 2 bis 5, **dadurch gekennzeichnet, dass** die Unterbrechung (Δt) aus einem der folgenden Gründe erfolgte:
- Stillstand der Maschine (100) aufgrund einer Abschaltung,
- Stillstand der Maschine (100) aufgrund von Wartung oder Reparatur,
- Stillstand der Maschine (100) aufgrund von Umrüstung.

7. Verfahren nach einem der Ansprüche 2 bis 5, **dadurch gekennzeichnet, dass** die Unterbrechung (Δt) mindestens 15 Minuten dauert.

8. Verfahren nach einem der Ansprüche 1 bis 3, **dadurch gekennzeichnet, dass** ein Stillstand der Maschine (100) als Unterbrechung (Δt) zählt, wenn eine an oder in der Maschine (100) gemessene Temperatur um mehr als 10 Prozent geringer ist als die Beharrungstemperatur (T_{VH}), die sich an oder in der Maschine (100) im Dauerbetrieb einstellt.

9. Verfahren nach einem der Ansprüche 1 bis 3, **dadurch gekennzeichnet, dass** vor dem Durchführen der Bearbeitung des ersten Werkstücks (1) an einem anderen Werkstück (0) die folgenden Schritte durchgeführt werden:
- Durchführen der Bearbeitung dieses anderen Werkstücks (0) in der Maschine (100), wobei sich dieses andere Werkstück (0) während der Bearbeitung erwärmt,
- Ermitteln einer oder mehrerer Kenngrößen dieses anderen Werkstücks (0) im abgekühlten Zustand, zum Ermitteln ob dieses andere Werkstück (0) Sollwerten entspricht.

## Claims

1. Method for operating a gear-processing machine (100), comprising the following steps:
- carrying out the machining of a first workpiece (1) in the machine (100), wherein the first workpiece (1) heats up because of the machining,
- determining at least one characteristic workpiece variable (W.1) on the first workpiece (1) in the heated state, wherein a measuring device (50), which is part of the machine (100), is used for the determination,
- carrying out a compensation determination on the basis of the at least one characteristic workpiece variable (W.1) of the first workpiece (1) and at least one characteristic workpiece variable (W.R) of a reference workpiece (R), wherein
∘ the characteristic workpiece variable (W.R) of the reference workpiece (R) was determined in the machine (100) after reaching a steady-state temperature (T_{VH}),
∘ at least one compensation value is determined in the scope of the compensation determination,
- adapting the machine setting in consideration of the at least one compensation value,
- carrying out the machining of a further workpiece (n) in the machine (100).

2. The method according to claim 1, **characterized in that** the reference workpiece (R) is one of the workpieces which were machined before an interruption (Δt) in the machine (100).

3. The method according to claim 1 or 2, **characterized in that** carrying out the machining of the first workpiece (1) and the determination of at least one characteristic workpiece variable (W.1) are performed in the machine (100) immediately after an interruption (Δt).

4. The method according to any one of claims 1 to 3, **characterized in that** the steady-state temperature (T_{VH}) is the temperature of the machine (100) which results on or in the machine (100) in continuous operation.

5. The method according to any one of claims 1 to 4, **characterized in that** the determination of the characteristic workpiece variables (W.1, W.2, W.R) is performed by means of a measuring probe (51) of the measuring device (50), wherein the measuring device (50) is part of the machine (100) and wherein the corresponding workpiece (1, 2, R) is not re-chucked during the determination of the characteristic workpiece variables (W.1, W.2, W.R).

6. The method according to any one of claims 2 to 5, **characterized in that** the interruption (Δt) occurred for one of the following reasons:
- stoppage of the machine (100) because of a shutdown,
- stoppage of the machine (100) because of maintenance or repair,
- stoppage of the machine (100) because of refitting.

7. The method according to any one of claims 2 to 5, **characterized in that** the interruption (Δt) lasts at least 15 minutes.

8. The method as claimed in any one of claims 1 to 3, **characterized in that** a stoppage of the machine (100) counts as an interruption (Δt) if a temperature measured on or in the machine (100) is less by more than 10% than the steady-state temperature (T_{VH}), which results on or in the machine (100) in continuous operation.

9. The method as claimed in any one of claims 1 to 3, **characterized in that** before carrying out the machining of the first workpiece (1), the following steps are carried out on another workpiece (0):
- carrying out the machining of this other workpiece (0) in the machine (100), wherein this other workpiece (0) heats up during the machining,
- determining one or more characteristic variables of this other workpiece (0) in the cooled state, to determine whether this other workpiece (0) corresponds to target values.

## Revendications

1. Procédé pour faire fonctionner une machine à usinage de denture (100) comprenant les étapes suivantes :
- réaliser l'usinage d'une première pièce (1) dans la machine (100), la première pièce (1) se réchauffant du fait de l'usinage,
- déterminer au moins une grandeur de pièce caractéristique (W.1) sur la première pièce (1) à l'état chauffé, un dispositif de mesure (50) faisant partie de la machine (100) étant utilisé aux fins de ladite détermination,
- réaliser une détermination de compensation à l'aide de la au moins une grandeur de pièce caractéristique (W.1) de la première pièce (1) et d'au moins une grandeur de pièce caractéristique (W.R) d'une pièce de référence (R),
• la grandeur de pièce caractéristique (W.R) de la pièce de référence (R) ayant été déterminée dans la machine (100) une fois la température de l'équilibre thermique (TVH) atteinte,
• au moins une valeur de compensation étant déterminée dans le cadre de la détermination de la compensation,
- adapter le réglage de la machine en tenant compte de la au moins une valeur de compensation,
- réaliser l'usinage d'une autre pièce (n) dans la machine (100).

2. Procédé selon la revendication 1, **caractérisé en ce que** la pièce de référence (R) est une des pièces qui ont été usinées avant une interruption (Δt) de la machine (100).

3. Procédé selon la revendication 1 ou 2, **caractérisé en ce que** la réalisation de l'usinage de la première pièce (1) et la détermination d'au moins une grandeur de pièce caractéristique (W.1) se font dans la machine (100) immédiatement après une interruption (Δt).

4. Procédé selon l'une des revendications 1 à 3, **caractérisé en ce que** la température de l'équilibre thermique (TVH) est la température de la machine (100) qui règne au niveau de ou dans la machine (100) en fonctionnement continu.

5. Procédé selon l'une des revendications 1 à 4, **caractérisé en ce que** la détermination des grandeurs de pièce caractéristiques (W.1, W.2, W.R) se fait à l'aide d'un capteur de mesure (51) du dispositif de mesure (50), dans lequel le dispositif de mesure (50) fait partie de la machine (100), et dans lequel lors de la détermination des grandeurs de pièce caractéristiques (W.1, W.2, W.R) la pièce correspondante (1, 2, R) n'est pas serrée.

6. Procédé selon l'une des revendications 2 à 5, **caractérisé en ce que** l'interruption (Δt) est intervenue pour l'une des raisons suivantes :
- arrêt de la machine (100) en raison d'une mise hors tension,
- arrêt de la machine (100) en raison d'un entretien ou d'une réparation,
- arrêt de la machine (100) en raison d'un changement d'outillage.

7. Procédé selon l'une des revendications 2 à 5, **caractérisé en ce que** l'interruption (Δt) dure au moins 15 minutes.

8. Procédé selon l'une des revendications 1 à 3, **caractérisé en ce qu'**un arrêt de la machine (100) est considéré comme interruption (Δt) lorsque la température mesurée au niveau de ou dans la machine (100) est inférieure de plus de 10 pour cent par rapport à la température de l'équilibre thermique (T_{VH}) qui règne au niveau de ou dans la machine (100) en fonctionnement continu.

9. Procédé selon l'une des revendications 1 à 3, **caractérisé en ce que** avant de réaliser l'usinage de la première pièce (1) sur une autre pièce (0) on réalise les étapes suivantes consistant à :
- réaliser l'usinage de cette autre pièce (0) dans la machine (100), cette autre pièce (0) se réchauffant pendant l'usinage,
- déterminer une ou plusieurs grandeurs caractéristiques de cette autre pièce (0) à l'état refroidi, pour déterminer si cette autre pièce (0) correspond aux valeurs de consigne.
